# EUROPÄISCHE PATENTSCHRIFT

(11) **EP 2 334 529 B1**
(45) Veröffentlichungstag und Bekanntmachung des Hinweises auf die Patenterteilung: **04.09.2019**
(21) Anmeldenummer: 09777462.4
(22) Anmeldetag: 27.07.2009
(51) Int. Cl.: B60T 13/567, B60T 13/565, B60T 13/563

(54) **BREMSKRAFTERZEUGER FÜR EINE KRAFTFAHRZEUGBREMSANLAGE MIT STÜTZEINRICHTUNG FÜR RÜCKSTELLFEDER**
BRAKING FORCE GENERATOR FOR A MOTOR VEHICLE BRAKE SYSTEM HAVING A SUPPORT SYSTEM FOR A RETURN SPRING
GÉNÉRATEUR DE FORCE DE FREINAGE POUR UN SYSTÈME DE FREINAGE D'UN VÉHICULE AUTOMOBILE, AVEC DISPOSITIF D'APPUI POUR UN RESSORT DE RAPPEL

(30) Priorität: 29.07.2008 DE 102008035179
(43) Veröffentlichungstag der Anmeldung: 22.06.2011
(73) Patentinhaber: Lucas Automotive GmbH, 56070 Koblenz (DE); TRW Braking Systems Polska Sp. z o.o., 44-121 Gliwice (PL)
(72) Erfinder: CALVO MARTINEZ, José Manuel, 56642 Kruft (DE); WINGENDER, Kurt, 56244 Hartenfels (DE); KNAPIK, Grzegorz, Tarnowskie Gory (PL)
(74) Vertreter: Thum, Bernhard
(86) Internationale Anmeldenummer: PCT/EP2009/005429
(87) Internationale Veröffentlichungsnummer: WO 2010/012440

(56) Entgegenhaltungen:
- EP-A- 1 422 116
- US-B1- 6 213 569
- US-B1- 6 302 011

## Beschreibung

Die vorliegende Erfindung betrifft einen Bremskrafterzeuger für eine Kraftfahrzeugbremsanlage, mit
- einem mit einem Bremspedal gekoppelten oder koppelbaren verlagerbaren Krafteingangsglied,
- einem nach Maßgabe einer Verlagerung des Krafteingangsglieds betätigbaren Steuerventil,
- einer in einem Verstärkergehäuse angeordneten, über das Steuerventil ansteuerbaren Kammeranordnung mit wenigstens einer Unterdruckkammer und wenigstens einer Arbeitskammer, die über wenigstens eine mit dem Steuerventil gekoppelte bewegliche Wand voneinander getrennt sind, und
- einem Kraftausgangsglied zum Abgeben einer Bremskraft an ein nachgeschalteten Bremssystem,
wobei das Steuerventil mit dem Kraftausgangsglied über eine Rückstellfeder in eine Ausgangsstellung vorgespannt ist, wobei sich die Rückstellfeder mit ihrem einen Ende an dem Steuerventil abstützt.

Ein derartiger Bremskrafterzeuger ist aus dem Stand der Technik bekannt. So zeigt das Dokument EP 1 422 116 B1 einen Bremskrafterzeuger dieser Art. Bei diesem Bremskrafterzeuger ist eine Rückstellfederanordnung, bestehend aus zwei Rückstellfedern, vorgesehen, die sich mit ihrem einen Ende an einem Steuerventilgehäuse des Steuerventils abstützt. Mit ihrem anderen Ende stützt sich die Rückstellfeder an einer Hauptbremszylinderanordnung an. Dadurch wird einerseits die Hauptbremszylinderanordnung in eine Ausgangsstellung vorgespannt, andererseits wird das Steuerventilgehäuse und die mit diesem gekoppelte bewegliche Wand in ihre Ausgangsstellung vorgespannt. Es hat sich jedoch gezeigt, dass bei der Montage derartiger Bremskrafterzeuger, insbesondere vor der Anbringung des Bremskrafterzeugers an der nachgeschalteten Hauptbremszylinderanordnung, eine der Rückstellfedern oder die gesamte Rückstellfederanordnung aus dem Bremskrafterzeuger herausfallen oder sich verkanten kann. Dies hat zur Folge, dass die Rückstellfedern nachträglich wieder eingesetzt werden müssen, was zum einen den Montageaufwand erhöht, zum anderen aber fehleranfällig ist, beispielsweise deshalb, weil die Federn falsch herum eingesetzt werden oder beim Herausfallen Schaden erleiden.

Dokument US 6 213 569 B1 offenbart einen Bremskrafterzeuger für eine Kraftfahrzeugbremsanlage, mit einem mit einem Bremspedal koppelbaren verlagerbaren Krafteingangsglied, mit einem Stützring, an dem sich eine Rückstellfeder abstützt.

Es ist demgegenüber Aufgabe der vorliegenden Erfindung, einen Bremskrafterzeuger der eingangs bezeichneten Art bereitzustellen, der bei gleicher Funktionalität und einfachem Aufbau ein unbeabsichtigtes Herausfallen der Rückstellfeder verhindert.

Diese Aufgabe wird durch einen Bremskrafterzeuger mit den Merkmalen des Anspruchs 1.

Ein Stützring ist vorgesehen, der die Rückstellfeder vor und während der Montage in einer Soll-Stellung hält und so ein unerwünschtes Herausfallen der Rückstellfeder aus dem Bremskrafterzeuger vor der Anbringung der Hauptbremszylinderanordnung oder einer anderen dem Bremskrafterzeuger nachgeschalteten Komponente des Bremssystems verhindert.

Die Erfindung sieht demnach vor, durch ein einfaches zusätzliches Bauteil, welches die Funktion des Bremskrafterzeugers in keiner Weise ändert, seine Montagesicherheit aber erheblich verbessert, die eingangs mit Bezug auf den Stand der Technik beschriebene Fehleranfälligkeit vor und während der Montage zu beseitigen.

Wenn im Zusammenhang mit der Beschreibung der vorliegenden Erfindung von einem "Bremskrafterzeuger" die Rede ist, dann wird mit diesem Begriff zum einen ein herkömmlicher Unterdruckbremskraftverstärker erfasst, der infolge einer Betätigung des Steuerventils über ein bremspedalbetätigtes Krafteingangsglied eine in üblicher Weise über eine Druckdifferenz an der beweglichen Wand der Kammeranordnung verstärkte Betätigungskraft an das nachgeschaltete Bremssystem abgibt. Der Begriff "Bremskrafterzeuger" umfasst aber auch in jüngeren Bremsanlagen eingesetzte Vorrichtungen, bei denen die Bremskraft synthetisch erzeugt wird. Bei derartigen Bremskrafterzeugern dissipiert die am Bremspedal erzeugte Betätigungskraft weitgehend oder vollständig. Die an das nachgeschaltete Bremssystem übertragene Betätigungskraft wird bei derartigen Systemen synthetisch nach Maßgabe der Pedalbetätigung oder nach Maßgabe anderer Faktoren, wie beispielsweise einem Ausgangssignal eines Fahrassistenzsystems oder dergleichen, erzeugt.

Die Erfindung sieht vor, dass das Verstärkergehäuse einen Kragen aufweist, an den der Stützring anlegbar ist. Ein derartiger Kragen kann beispielsweise in Form eines an dem Verstärkergehäuse angeformten oder nachträglich angebrachten Rohrabschnitt ausgebildet sein, der sich in die Kammeranordnung hinein erstreckt. Es sind aber gleichermaßen auch andersartige Strukturen denkbar, mit denen der Stützring in stützende Wechselwirkung bringbar ist.

Erfindungsgemäß kann in diesem Zusammenhang ferner vorgesehen sein, dass der Stützring mit einer stirnseitigen Anlagefläche an dem Kragen des Verstärkergehäuses anlegbar ist. Alternativ hierzu kann vorgesehen sein, dass der Stützring eine stirnseitige Anlageschulter aufweist, mit der er formschlüssig am Kragen des Verstärkergehäuses anlegbar ist. Bei der letztgenannten Möglichkeit ist der Stützring formschlüssig in einer Sollposition relativ zu dem Verstärkergehäuse, insbesondere zu dessen Kragen, gehalten.

Erfindungsgemäß kann ferner vorgesehen sein, dass der Stützring auf seiner vom Verstärkergehäuse abgewandten Seite einen umlaufenden Ansatz aufweist, in dem das Ende der Rückstellfeder positionierend aufgenommen ist. Dadurch ist es möglich, die Rückstellfeder in einer Sollposition relativ zum Stützring zu positionieren, um zu verhindern, dass die Rückstellfeder sich in unerwünschter Weise relativ zum Stützring verlagert.

Erfindungsgemäß kann ferner vorgesehen sein, dass der Stützring einen zentralen Durchbruch aufweist, durch den sich das Kraftausgangsglied oder ein mit diesem gekoppeltes Übertragungselement zum Übertragen der Bremskraft auf das nachgeschaltete Bremssystem erstreckt. Der Durchbruch muss hinreichend groß bemessen sein, damit eine Übertragung der Ausgangskraft auf das nachgeschaltete Bremssystem, beispielsweise auf den Hauptbremszylinder möglich ist. Selbstverständlich sollte der Stützring hinreichend stabil sein, um seine Positionier- und Stützwirkung gewährleisten zu können.

Vorzugsweise ist der Stützring aus einem Kunststoffmaterial hergestellt. Alternativ kann er aber auch aus einem andersartigen Material, beispielsweise aus einem leichten Metall, wie Aluminium oder dergleichen, hergestellt sein.

Ferner kann erfindungsgemäß vorgesehen sein, dass der Stützring lediglich vor Montage des Bremskrafterzeugers an das nachgeschaltete Bremssystem in Wechselwirkung mit dem Verstärkergehäuse steht und nach Montage des Bremskrafterzeugers an das nachgeschaltete Bremssystem von dem Verstärkergehäuse abgehoben ist. So ist der Stützring lediglich als Positionier- und Montagehilfe anzusehen, wobei er vor einer Montage des Bremskrafterzeugers an das nachgeschaltete Bremssystem, beispielsweise den Hauptbremszylinder, ein Herausgleiten der Feder aus dem Verstärkergehäuse verhindert und die Rückstellfeder in einer zur einfachen Montage günstigen Sollposition hält. Nach der Montage wird der Stützring bei dieser Ausführungsvariante vom Verstärkergehäuse abgehoben und gelangt während des gesamten Betriebs nicht mehr in Anlage mit dem Verstärkergehäuse. Lediglich bei einer Demontage, beispielsweise im Falle einer Wartung oder eines Austauschs in der Fachwerkstatt, gelangt der Stützring wieder in Anlage mit dem Verstärkergehäuse und hält so die Rückstellfeder in ihrer Sollposition.

Gemäß einer Weiterbildung der Erfindung kann vorgesehen sein, dass der Stützring an einer Umfangsstelle geschlitzt ist. Durch eine geschlitzte Ausführung des Stützrings ist es möglich, diesen bei der Montage durchmesserverkleinernd zusammenzudrücken und dadurch leichter in das Verstärkergehäuse einzuführen und an dem Kragen des Verstärkergehäuses anzubringen. Nach Freigeben des Stützrings federt dieser aufgrund seiner elastischen Eigenschaften in seinen Originalzustand zurück und ist somit fest am Kragen gehalten. Diesbezüglich kann vorgesehen sein, dass die durch die Schlitzung entstandenen Stirnflächen des Stützrings zueinander parallel verlaufen oder einen Winkel von kleiner als 180° einschließen.

Die Erfindung wird im Folgenden beispielhaft anhand der beiliegenden Figuren erläutert.

Es stellen dar:
- Fig. 1: eine achsenthaltende Schnittansicht eines erfindungsgemäßen Bremskrafterzeugers mit zwei Stützringvarianten im Querschnitt;
- Fig. 2: die erste Stützringvariante im Querschnitt in Einzelteildarstellung;
- Fig. 3: eine zweite Stützringvariante in einer Ansicht entsprechend Fig. 2;
- Fig. 4: eine Ansicht des Bremskrafterzeugers entsprechend Fig. 1, jedoch nach der Montage im Betrieb;
- Fig. 5a-5c: den Stützring gemäß Fig. 2 in geschlitzter Ausführung, wobei Fig. 5b und 5c verschiedene Schlitzungsarten zeigen; und
- Fig. 6a-6c: den Stützring gemäß Fig. 3 in geschlitzter Ausführung, wobei Fig. 6b und 6c verschiedene Schlitzungsarten zeigen;

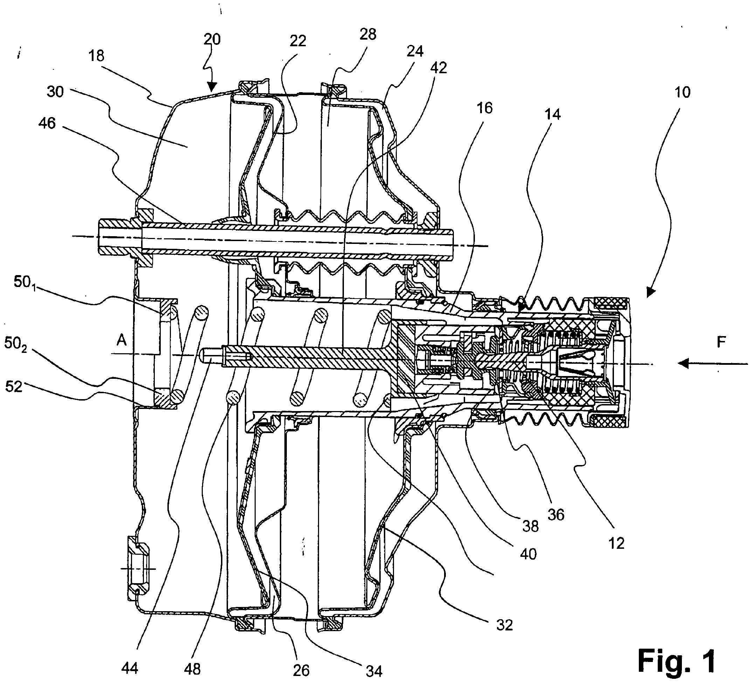

In Fig. 1 ist ein erfindungsgemäßer Bremskrafterzeuger in achsenthaltender Schnittansicht gezeigt und allgemein mit 10 bezeichnet. Der Bremskrafterzeuger umfasst ein Krafteingangsglied 12, das über ein Bremspedal mit einer Kraft F beaufschlagt werden kann und in Fig. 1 entlang einer Längsachse A nach links verlagert werden kann. Mit dem Krafteingangsglied 12 ist ein an sich herkömmlich aufgebautes Steuerventil 14 gekoppelt, dessen Steuerventilgehäuse 16 relativ zu einem Verstärkergehäuse 18 verlagerbar ist. In dem Verstärkergehäuse 18 befindet sich eine Tandemkammeranordnung 20, die über eine fest in dem Verstärkergehäuse 18 installierte Wand 22 in zwei Teile unterteilt ist. Jeder Teil umfasst eine Arbeitskammer 24 bzw. 26 und eine Unterdruckkammer 28, 30. Die Arbeitskammer 24 ist von der Unterdruckkammer 28 über eine bewegliche Wand 32 getrennt. Die Arbeitskammer 26 ist von der Unterdruckkammer 30 über eine weitere bewegliche Wand 34 getrennt.

Beide beweglichen Wände 32, 34 sind mit dem Steuerventilgehäuse 16 fest zur gemeinsamen Bewegung gekoppelt. In dem Steuerventil 14 sind zwei Ventilsitze 36, 38 angeordnet, wobei der erste Ventilsitz 36 die Arbeitskammern 24 und 26 von der Umgebungsatmosphäre trennt und wobei der zweite Ventilsitz 38 die Arbeitskammern 24 und 26 von den Unterdruckkammern 28 und 30 trennt.

Das Steuerventilgehäuse 16 ist über ein gummielastisches Reaktionsglied 40 mit einem Kraftausgangsglied 42 gekoppelt. Das Kraftausgangsglied 42 weist an seinem in Fig. 1 linken Ende einen zapfenartigen Vorsprung 44 auf, mit dem es mit einer nachgeschalteten Komponente einer Kraftfahrzeugbremsanlage, beispielsweise mit einer Hauptbremszylinderanordnung, kraftübertragend koppelbar ist. Das Verstärkergehäuse 18 durchsetzen Zugbolzen 46, über die der Bremskrafterzeuger 10 an einer Spritzwand anbringbar ist.

In Fig. 1 erkennt man ferner eine Rückstellfeder 48, die sich an einem Ende an dem Verstärkergehäuse 16 abstützt. Mit ihrem anderen Ende stützt sich die Rückstellfeder 48 an einem Stützring ab, der in Fig. 1 in zwei verschiedenen Ausführungen 50₁ und 50₂ gezeigt ist. Der Stützring 50₁ bzw. 50₂ stützt sich seinerseits wieder an einem sich rohrförmig in axialer Richtung in das Verstärkergehäuse 18 hinein erstreckenden Kragen 52 ab.

Der Bremskrafterzeuger nach Fig. 1 funktioniert in an sich üblicher Weise. Das heißt, bei einer Betätigung des nicht gezeigten Bremspedals wird eine Kraft F auf das Krafteingangsglied 12 ausgeübt, so dass sich das Krafteingangsglied 12 in Fig. 1 in axialer Richtung A nach links verlagert. Dadurch wird der erste Dichtsitz 36 geöffnet, so dass es zu einem Aufbau einer Druckdifferenz an den beweglichen Wänden 32 und 34 kommt. Diese bewirken, dass das Verstärkergehäuse 16 in Fig. 1 nach links verlagert wird, bis sich der erste Dichtsitz 36 wieder schließt. Somit wird die Betätigungskraft F verstärkt durch die sich aus der Druckdifferenz an den beweglichen Wänden 32 und 34 ergebende Verstärkerwirkung über das Kraftausgangsglied 42 an das nachfolgende Bremssystem übertragen. Beim Freigeben des Bremspedals laufen die vorstehend geschilderten Vorgänge in umgekehrter Reihenfolge ab, so dass es zu einer Druckentlastung an den beweglichen Wänden 32 und 34 kommt, bis der Bremskrafterzeuger 10 wieder in seine in Fig. 1 gezeigte Ausgangsstellung zurück kehrt.

Wie bereits ausgeführt, ist der Bremskrafterzeuger 10 in Fig. 1 in einer Vormontagestellung gezeigt, das heißt in einer Stellung, in der der Bremskrafterzeuger 10 noch nicht mit einem Hauptbremszylinder gekoppelt ist. In diesem Zustand liegt der Stützring 50₁ bzw. 50₂ an dem Kragen 52 des Verstärkergehäuses 18 an. Dadurch wird verhindert, dass die Rückstellfeder 48 aus dem Verstärkergehäuse 18 heraus rutschen kann. Vielmehr hält der Stützring 50₁ bzw. 50₂ die Rückstellfeder 48 in einer Sollstellung, die die Montage erheblich erleichtert.

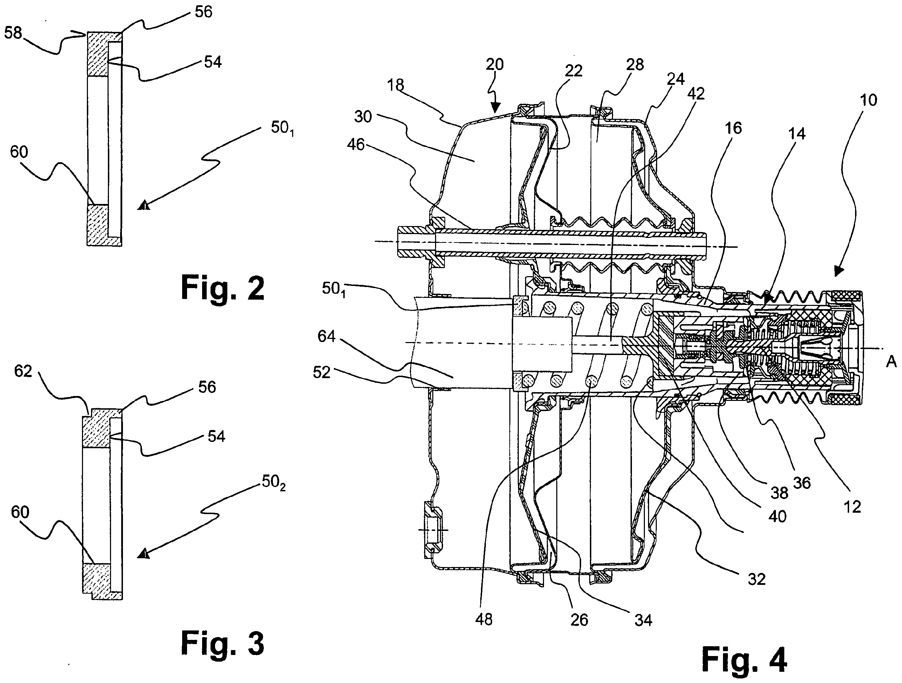

In Fig. 2 und 3 erkennt man die Stützringe 50₁ und 50₂ in Einzelteildarstellung. Der Stützring 50₁ gemäß Fig. 2 weist eine Anlagefläche 54 auf, an der sich das linke Ende der Rückstellfeder 48 abstützen kann. Diese Anlagefläche 54 ist von einem umlaufenden ringförmigen Ansatz 56 umgeben. Dieser Ansatz 56 positioniert die Rückstellfeder und hält diese in der Sollstellung, so dass die Rückstellfeder nicht orthogonal zur Längsachse A (siehe Fig. 1) abrutschen kann. An seiner von der Anlagefläche 54 abgewandten Seite weist der Stützring 50₁ stirnseitig eine weitere Anlagefläche 58 auf. Mit dieser Anlagefläche 58 liegt der Stützring 50₁ an dem Verstärkergehäuseseitigen Kragen an und stützt sich an diesem ab. Schließlich weist der Stützring 50₁ noch einen zentralen Durchbruch 60 auf, durch den sich das Kraftausgangsglied 42 und/oder eine Komponente des nachgeschalteten Bremssystems erstrecken können.

Fig. 3 zeigt eine abgewandelte Ausführungsform des Stützrings gemäß Fig. 2, wobei dieser Stützring mit dem Bezugszeichen 50₂ versehen ist. Der einzige Unterschied zwischen dem Stützring gemäß Fig. 2 und dem Stützring gemäß Fig. 3 besteht darin, dass der Stützring 50₂ gemäß Fig. 3, abgesehen von einer geringfügig anderen Dimensionierung, zusätzlich einen umlaufenden Schulterabschnitt 62 aufweist, mit dem er formschlüssig an dem Verstärkergehäuseseitigen Kragen 52 angreift und somit formschlüssig an diesem gegen ein unbeabsichtigtes Verrutschen gehalten ist.

Fig. 4 zeigt den erfindungsgemäßen Bremskrafterzeuger 10 in montierter Stellung, wobei ein Übertragungskolben 64 in das Verstärkergehäuse 18 eingeführt und in dem Kragen 52 geführt ist. Man erkennt, dass der Kolben 64 stufenförmig ausgebildet ist, und das linke Ende des Kraftausgangsglieds 42 in sich aufnimmt. Man erkennt ferner, dass der Stützring 50₁ von dem Verstärkergehäuseseitigen Kragen 52 abgehoben ist, wobei sich dessen von der Rückstellfeder abgewandte Stirnfläche an den Kolben 64 angelegt hat. Mit anderen Worten stützt sich die Rückstellfeder 48 mit ihrem in Fig. 4 linken Ende über den Stützring 50₁ an dem Kolben 64 ab. In der montierten Stellung gemäß Fig. 4 hat der Stützring 50₁, außer einer stützenden und positionierenden Wirkung für die Rückstellfeder 48 über seinen radial äußeren Ringansatz 56, keine weitere Bedeutung. Wird allerdings zu Wartungs- oder Austauschzwecken der Bremskrafterzeuger 10 von dem Kolben 64 wieder gelöst, so kann sich die Rückstellfeder 48 entspannen, bis sich der Stützring 50₁ wieder an den Kragen 52 anlegt und die Rückstellfeder 48 dann in ihrer vorpositionierten Stellung hält.

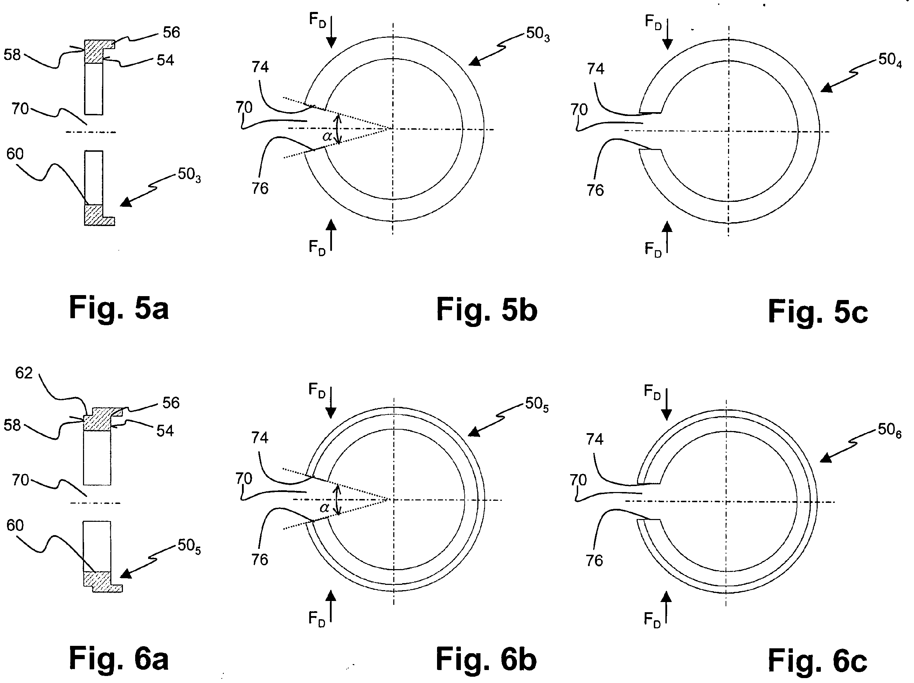

In Fig. 5a bis 5c erkennt man den Stützring aus Fig. 2, jedoch in geschlitzter Ausführung. Insbesondere ist dieser Stützring 50₃ bzw. 50₄, wie in Fig. 5b und 5c gezeigt, in einer Umfangsstelle mit einem Schlitz 70 bzw. 72 versehen. Dadurch lässt sich der Stützring 50₃ bzw. 50₄ wie durch die Pfeile F_{D} dargestellt, elastisch zusammendrücken und dadurch für die Montage verkleinern. Nach Freigabe des Stützrings 50₃ bzw. 50₄ entspannt sich dieser wieder in seine ursprüngliche Form. Dies erleichtert erheblich die Montage im Verstärkergehäuse 18. Man erkennt in Fig. 5b, dass die Stirnflächen 74 und 76 des Stützrings 50₃ einen spitzen Winkel *α* einschließen, der im gezeigten Ausführungsbeispiel bei etwa 30° liegt. Das Ausführungsbeispiel gemäß Fig. 5c unterscheidet sich diesbezüglich darin, dass die beiden Stirnflächen 74 und 76 des Stützrings 50₄ zueinander im Wesentlichen parallel verlaufen.

Die Ausführungsformen des Stützrings 50₅ bzw. 50₆ gemäß Fig. 6a bis 6c entsprechen dem Stützring 50₂ gemäß Fig. 3 mit Schulterabschnitt 62, jedoch wiederum in geschlitzter Gestalt. Es gelten bezüglich der Schlitzung dieselben Ausführungen, wie sie bezüglich Fig. 5a bis 5c getroffen wurden.

## Patentansprüche

1. Bremskrafterzeuger (10) für eine Kraftfahrzeugbremsanlage, mit
- einem mit einem Bremspedal gekoppelten oder koppelbaren verlagerbaren Krafteingangsglied (12),
- einem nach Maßgabe einer Verlagerung des Krafteingangsglieds (12) betätigbaren Steuerventil (14),
- einer in einem Verstärkergehäuse (18) angeordneten, über das Steuerventil (14) ansteuerbaren Kammeranordnung (20) mit wenigstens einer Unterdrucckammer (28, 30) und wenigstens einer Arbeitskammer (24, 26), die über wenigstens eine mit dem Steuerventil (14) gekoppelte bewegliche Wand (32, 34) voneinander getrennt sind, und
- einem Kraftausgangsglied (42) zum Abgeben einer Bremskraft an ein nachgeschalteten Bremssystem,
wobei das Steuerventil (14) mit dem Kraftausgangsglied (42) über eine Rückstellfeder (48) in eine Ausgangsstellung vorgespannt ist, wobei sich die Rückstellfeder (48) mit ihrem einen Ende an dem Steuerventil (14) abstützt,
wobei ein Stützring (50₁, 50₂, 50₃, 50₄, 50₅, 50₆) vorgesehen ist, an dem sich die Rückstellfeder (48) mit ihrem anderen Ende abstützt, wobei der Stützring (50₁, 50₂, 50₃, 50₄, 50₅, 50₆) mit dem Verstärkergehäuse (18) in stützende Wechselwirkung bringbar ist,
**dadurch gekennzeichnet, dass** das Verstärkergehäuse (18) einen Kragen (52) aufweist, an den der Stützring (50₁, 50₂, 50₃, 50₄, 50₅, 50₆) mit einer stirnseitigen Anlagefläche (58, 62) anlegbar ist.

2. Bremskrafterzeuger (10) nach Anspruch 1,
**dadurch gekennzeichnet, dass** der Stützring (50₂, 50₅) eine stirnseitige Anlageschulter (62) aufweist, mit der er formschlüssig am Kragen (52) des Verstärkergehäuses (18) anlegbar ist.

3. Bremskrafterzeuger (10) nach einem der vorangehenden Ansprüche,
**dadurch gekennzeichnet, dass** der Stützring (50₁, 50₂, 50₃, 50₄, 50₅, 50₆) auf seiner vom Verstärkergehäuse (18) abgewandten Seite einen umlaufenden Ansatz (56) aufweist, in dem das Ende der Rückstellfeder (48) positionierend aufgenommen ist.

4. Bremskrafterzeuger (10) nach einem der vorangehenden Ansprüche,
**dadurch gekennzeichnet, dass** der Stützring (50₁, 50₂, 50₃, 50₄, 50₅, 50₆) einen zentralen Durchbruch (60) aufweist, durch den sich das Kraftausgangsglied (42) oder ein mit diesem gekoppeltes Übertragungselement (64) zum Übertragen der Bremskraft auf das nachgeschaltete Bremssystem erstreckt.

5. Bremskrafterzeuger (10) nach einem der vorangehenden Ansprüche,
**dadurch gekennzeichnet, dass** der Stützring (50₁, 50₂, 50₃, 50₄, 50₅, 50₆) lediglich vor Montage des Bremskrafterzeugers (10) an das nachgeschaltete Bremssystem in Wechselwirkung mit dem Verstärkergehäuse (18) steht und nach Montage des Bremskrafterzeugers (10) an das nachgeschaltete Bremssystem von dem Verstärkergehäuse (18) abgehoben ist.

6. Bremskrafterzeuger (10) nach einem der vorangehenden Ansprüche,
**dadurch gekennzeichnet, dass** der Stützring (50₃, 50₄, 50₅, 50₆) an einer Umfangsstelle (70) geschlitzt ist.

7. Bremskrafterzeuger (10) nach einem der vorangehenden Ansprüche,
**dadurch gekennzeichnet, dass** die durch die Schlitzung entstandenen Stirnflächen (74, 76) des Stützrings (50₃, 50₄, 50₅, 50₆) zueinander parallel verlaufen oder einen Winkel von <180° einschließen.

## Claims

1. Brake force generator (10) for a motor vehicle brake system, comprising
• a displaceable force input element (12) connected or connectable to a brake pedal,
• a control valve (14) actuable in accordance with a displacement of the force input element (12),
• a chamber arrangement (20) disposed in a booster housing (18) and controllable by means of the control valve (14) and comprising at least one vacuum chamber (28, 30) and at least one working chamber (24, 26), which are separated from one another by at least one movable wall (32, 34) connected to the control valve (14), and
• a force output element (42) for supplying a brake force to a downstream brake system,
wherein the control valve (14) with the force output element (42) is biased by a resetting spring (48) into a normal position, wherein the resetting spring (48) is supported by its one end against the control valve (14),
wherein a support ring (50₁, 50₂, 50₃, 50₄, 50₅, 50₆) is provided, against which the resetting spring (48) is supported by its other end, wherein the support ring (50₁, 50₂, 50₃, 50₄, 50₅, 50₆) may be brought into supportive interaction with the booster housing (18),
**characterized in that** the booster housing (18) has a collar (52), against which the support ring (50₁, 50₂, 50₃, 50₄, 50₅, 50₆) is positionable with an end-face abutment surface (58, 62) against the collar (52) of the booster housing (18).

2. Brake force generator (10) according to claim 1,
**characterized in that** the support ring (50₁, 50₂) has an end-face abutment shoulder (62), with which it is positionable positively against the collar (52) of the booster housing (18).

3. Brake force generator (10) according to one of the preceding claims,
**characterized in that** the support ring (50₁, 50₂, 50₃, 50₄, 50₅, 50₆) at its side remote from the booster housing (18) has a circumferential attachment (56), in which the end of the resetting spring (48) is accommodated in a positioning manner.

4. Brake force generator (10) according to one of the preceding claims,
**characterized in that** the support ring (50₁, 50₂, 50₃, 50₄, 50₅, 50₆) has a central hole (60), through which the force output element (42) or a transmission element (64) connected thereto extends for transmitting the brake force to the downstream brake system.

5. Brake force generator (10) according to one of the preceding claims,
**characterized in that** the support ring (50₁, 50₂, 50₃, 50₄, 50₅, 50₆) only prior to mounting of the brake force generator (10) onto the downstream brake system is in interaction with the booster housing (18) and after mounting of the brake force generator (10) onto the downstream brake system is lifted off the booster housing (18).

6. Brake force generator (10) according to one of the preceding claims,
**characterized in that** the support ring (50₃, 50₄, 50₅, 50₆) is slotted at a peripheral point.

7. Brake force generator (10) according to one of the preceding claims,
**characterized in that** the end faces (74, 76) of the support ring (50₃, 50₄, 50₅, 50₆) that are produced by the slotting extend parallel to one another or include an angle of < 180°.

## Revendications

1. Générateur de force de freinage (10) pour un système de freinage de véhicule automobile, comprenant
- un élément d'entrée de force (12) déplaçable, couplé ou pouvant être couplé à une pédale de frein,
- une soupape de commande (14) pouvant être actionnée en fonction d'un déplacement de l'élément d'entrée de force (12),
- un agencement de chambres (20) disposé dans un boîtier d'amplificateur (18) et pouvant être commandé par la soupape de commande (14), comprenant au moins une chambre à vide (28, 30) et au moins une chambre de travail (24, 26) qui sont séparées l'une de l'autre par au moins une paroi mobile (32, 34) couplée à la soupape de commande (14), et
- un élément de sortie de force (42) pour fournir une force de freinage à un système de freinage en aval,
dans lequel la soupape de commande (14) est précontrainte dans une position initiale avec l'élément de sortie de force (42) par l'intermédiaire d'un ressort de rappel (48), le ressort de rappel (48) s'appuyant par l'une de ses extrémités sur la soupape de commande (14),
dans lequel une bague d'appui (50₁, 50₂, 50₃, 50₄, 50₅, 50₆) est prévue, sur laquelle le ressort de rappel (48) s'appuie par son autre extrémité, la bague d'appui (50₁, 50₂, 50₃, 50₄, 50₅, 50₆) pouvant être mise en interaction d'appui avec le boîtier d'amplificateur (18),
**caractérisé en ce que** le boîtier d'amplificateur (18) présente un collet (52) contre lequel la bague d'appui (50₁, 50₂, 50₃, 50₄, 50₅, 50₆) peut être appliquée par une surface d'application frontale (58, 62).

2. Générateur de force de freinage (10) selon la revendication 1,
**caractérisé en ce que** la bague d'appui (50₂, 50₅) présente un épaulement d'application frontal (62) avec lequel elle peut être appliquée par complémentarité de forme sur le collet (52) du boîtier d'amplificateur (18).

3. Générateur de force de freinage (10) selon l'une des revendications précédentes,
**caractérisé en ce que** la bague d'appui (50₁, 50₂, 50₃, 50₄, 50₅, 50₆) présente sur son côté opposé au boîtier d'amplificateur (18) une saillie périphérique (56) dans laquelle l'extrémité du ressort de rappel (48) est reçue de façon positionnée.

4. Générateur de force de freinage (10) selon l'une des revendications précédentes,
**caractérisé en ce que** la bague d'appui (50₁, 50₂, 50₃, 50₄, 50₅, 50₆) présente une ouverture centrale (60) à travers laquelle s'étend l'élément de sortie de force (42) ou un élément de transmission (64) couplé à celui-ci pour transmettre la force de freinage au système de freinage en aval.

5. Générateur de force de freinage (10) selon l'une des revendications précédentes,
**caractérisé en ce que** la bague d'appui (50₁, 50₂, 50₃, 50₄, 50₅, 50₆) n'interagit avec le boîtier d'amplificateur (18) qu'avant le montage du générateur de force de freinage (10) sur le système de freinage en aval et est soulevée du boîtier d'amplificateur (18) après le montage du générateur de force de freinage (10) sur le système de freinage en aval.

6. Générateur de force de freinage (10) selon l'une des revendications précédentes,
**caractérisé en ce que** la bague d'appui (50₃, 50₄, 50₅, 50₆) est fendue en un point circonférentiel (70).

7. Générateur de force de freinage (10) selon l'une des revendications précédentes,
**caractérisé en ce que** les faces frontales (74, 76) de la bague d'appui (50₃, 50₄, 50₅, 50₆) formées par la fente s'étendent parallèlement l'une à l'autre ou forment un angle < 180°.
